# EUROPEAN PATENT SPECIFICATION

(11) **EP 3 278 865 B1**
(45) Date of publication and mention of the grant of the patent: **19.06.2019**
(21) Application number: 15887513.8
(22) Date of filing: 30.03.2015
(51) Int. Cl.: B01D 63/00, B01D 63/08, C02F 1/44, B01D 61/08, B01D 61/18

(54) **MEMBRANE SEPARATION APPARATUS**
MEMBRANABSCHEIDUNGSVORRICHTUNG
APPAREIL DE SÉPARATION PAR MEMBRANE

(43) Date of publication of application: 07.02.2018
(73) Proprietor: Mitsubishi Heavy Industries Engineering, Ltd., Yokohama-shi, Kanagawa 220-8401 (JP)
(72) Inventor: KAMITO, Ryo, Tokyo 108-8215 (JP); OKINO, Susumu, Tokyo 108-8215 (JP); SUGIYAMA, Shigehiro, Tokyo 108-8215 (JP); EDA, Masayuki, Tokyo 108-8215 (JP); SAKURAI, Hideaki, Tokyo 108-8215 (JP); UKAI, Nobuyuki, Tokyo 108-8215 (JP); SUZUKI, Hideo, Tokyo 108-8215 (JP); NAKASHOJI, Hiroshi, Tokyo 108-8215 (JP); YOSHIOKA, Shigeru, Tokyo 108-8215 (JP)
(74) Representative: Henkel, Breuer & Partner
(86) International application number: PCT/JP2015/059910
(87) International publication number: WO 2016/157360

(56) References cited:
- EP-A1- 2 564 919
- WO-A1-90/10211
- JP-A- H05 157 680
- JP-A- S63 282 632
- JP-A- S63 282 632
- JP-A- 2014 213 262
- US-A- 4 846 970
- US-A- 5 015 388
- US-A1- 2012 234 083

## Description

### Field

The present invention relates to a membrane separation apparatus, and in particular, to a membrane separation apparatus that is suitably used as a membrane separation apparatus for monitoring of scale in a water treatment apparatus.

### Background

Conventionally, a flat membrane testing apparatus has been proposed, the flat membrane testing apparatus having an inner O-ring and an outer O-ring arranged in groove portions of a lower support body, the inner O-ring sealing between a separation membrane and the lower support body, the outer O-ring sealing between an upper support and the lower support body, the inner O-ring and outer O-ring serving as a sealing member between the upper support body and the lower support body sandwiching a test membrane (see, for example, US 4846970). In this flat membrane testing apparatus, water to be treated is supplied into the flat membrane testing apparatus from a water-to-be-treated introduction port provided in the lower support body, permeated water that has permeated the separation membrane is discharged from a permeated water discharge port provided in the upper support body, and concentrated water is discharged from a concentrated water discharge port provided in a lower cell.

WO 90/10211 A1 discloses a membrane separation apparatus in which the upper and lower support bodies on both sides of the membrane are formed from solid blocks of material in which the necessary openings, bores or flow channels are machined into the solid material.

JP S63-282632 A discloses a membrane separation apparatus which is similar in this respect to the structure of the membrane separation apparatus of WO 90/10211 A1.

US 5015388 A discloses a membrane separation apparatus which has a certain modularization in plate-like elements layered over one another.

### Summary

### Technical Problem

However, in the flat membrane testing apparatus described in US 4846970, since sealing between the separation membrane and the lower support body is realized by abutment between the separation membrane and the inner O-ring, there is a problem that as the inner O-ring is deteriorated, the separation membrane is damaged by contact between the separation membrane and a corner portion of the groove portion of the lower support body accommodating the inner O-ring therein. Therefore, a membrane separation apparatus, which enables prevention of damage to a separation membrane associated with deterioration of a sealing member, has been desired.

The present invention has been made in view of these actual circumstances, and aims to provide a membrane separation apparatus that enables prevention of damage to a separation membrane even if a sealing member is deteriorated and where the maintainability of the membrane separation apparatus is improved.

### Solution to Problem

A membrane separation apparatus of the present invention comprises the features of claim 1, including: a lower support body having a water-to-be-treated introduction port and a concentrated water discharge port provided therein; an upper support body having a permeated water discharge port provided therein; a separation membrane that is provided between the lower support body and the upper support body, and that separates water to be treated into permeated water and concentrated water; and a first sheet-like elastic member that is provided between the separation membrane and the lower support body, and that seals between the separation membrane and the lower support body and between the lower support body and the upper support body.

According to this configuration, since sealing between the lower support body and the upper support body is realized by the first sheet-like elastic member without provision of a groove portion accommodating therein a sealing member; even if the sheet-like elastic member serving as the sealing member is deteriorated, damage to the separation membrane is able to be prevented.

The membrane separation apparatus according to present invention comprises a second sheet-like elastic member that is provided between the upper support body and the separation membrane, and that seals between the upper support body and the lower support body. According to this configuration, sealing between the lower support body and the upper support body is able to be realized efficiently.

In the membrane separation apparatus according to present invention, it is preferable that the first sheet-like elastic member and the second sheet-like elastic member are arranged to cover a corner portion of an opening of the lower support body. According to this configuration, since the first sheet-like elastic member and the second sheet-like elastic member are able to protect the corner portion of the lower support body, and contact between the separation membrane and the corner portion of the lower support body is thus able to be prevented, damage to the separation membrane is able to be prevented efficiently.

In the membrane separation apparatus according to present invention, the lower support body includes inter alia: a water-to-be-treated introduction portion having the water-to-be-treated introduction port and the concentrated water discharge port provided therein; a primary side flow channel portion that is arranged between the water-to-be-treated introduction portion and the separation membrane, and that is provided with a primary side flow channel, through which the water to be treated that has been supplied from the water-to-be-treated introduction port is supplied to the separation membrane, and through which the concentrated water that has been concentrated by the separation membrane is supplied to the concentrated water discharge port; and a lower support portion that is arranged on the water-to-be-treated introduction portion and that supports the water-to-be-treated introduction portion: which are layered over one another. According to this configuration, if, for example, a problem is caused in the lower support body, just by replacement of the water-to-be-treated introduction portion or the primary side flow channel portion, which is being a cause of the problem, the problem in the lower support body is able to be solved, and thus maintainability of the membrane separation apparatus is improved. Further, even if there is a demand for modification in the configuration of the membrane separation apparatus due to, for example, water quality variation in the water to be treated, just by replacement of the necessary portion/portions, the demand is able to be dealt with.

In the membrane separation apparatus according to present invention, the upper support body includes inter alia: a permeated water discharge portion having the permeated water discharge port provided therein; a permeated water flow channel portion that is arranged between the permeated water discharge portion and the separation membrane, and that is provided with a permeated water flow channel, through which the permeated water is supplied to the permeated water discharge portion; and an upper support portion that is arranged on the permeated water discharge portion and that supports the permeated water discharge portion: which are layered over one another. According to this configuration, the separation membrane is able to be supported by the permeated water flow channel portion, and if, for example, a problem is caused in the upper support body, just by replacement of the permeated water flow channel portion or the permeated water discharge portion, which is being a cause of the problem, the problem in the upper support body is able to be solved, and thus maintainability of the membrane separation apparatus is improved. Further, even if there is a demand for modification in the configuration of the membrane separation apparatus due to, for example, water quality variation in the water to be treated, just by replacement of the necessary portion/portions, the demand is able to be dealt with.

In the membrane separation apparatus according to present invention, it is preferable that the first and second sheet-like elastic member contains at least one type of rubber selected from the group consisting of fluororubber, nitrile butyl rubber, and hydrogenated nitrile rubber. According to this configuration, sealing between the upper support body and the lower support body is able to be realized efficiently.

### Advantageous Effects of Invention

According to the present invention, a membrane separation apparatus, which enables prevention of damage to a separation membrane even if a sealing member is deteriorated, is able to be realized.

### Brief Description of Drawings

FIG. 1 is a schematic sectional view of a membrane separation apparatus according to an example serving to explain features of the present invention.
FIG. 2 is a schematic plan view of a lower support portion of the membrane separation apparatus according to the example.
FIG. 3 is a schematic plan view of a water-to-be-treated introduction portion of the membrane separation apparatus according to the example.
FIG. 4 is a schematic plan view of a lower flow channel portion of the membrane separation apparatus according to the example.
FIG. 5 is a schematic plan view of a primary side flow channel portion of the membrane separation apparatus according to the example.
FIG. 6 is a schematic plan view of an upper support portion of the membrane separation apparatus according to the example.
FIG. 7 is a schematic plan view of a permeated water discharge portion of the membrane separation apparatus according to the example.
FIG. 8 is a schematic plan view of a permeated water flow channel portion of the membrane separation apparatus according to the example.
FIG. 9 is a schematic plan view of a secondary side flow channel portion of the membrane separation apparatus according to the example.
FIG. 10 is a schematic sectional view of a membrane separation apparatus according to an embodiment of the present invention.

### Description of Embodiments

Hereinafter, embodiments of the present invention and examples serving to explain features of the invention will be described in detail, by reference to the appended drawings. Limitation is not made to the respective embodiments and examples below, and implementation may be made by modification as appropriate. Further, the respective embodiments and examples below may be implemented by being combined with each other, as appropriate within the scope of the claims. Furthermore, any component common to the respective embodiments will be appended with the same reference sign, and redundant description thereof will be avoided.

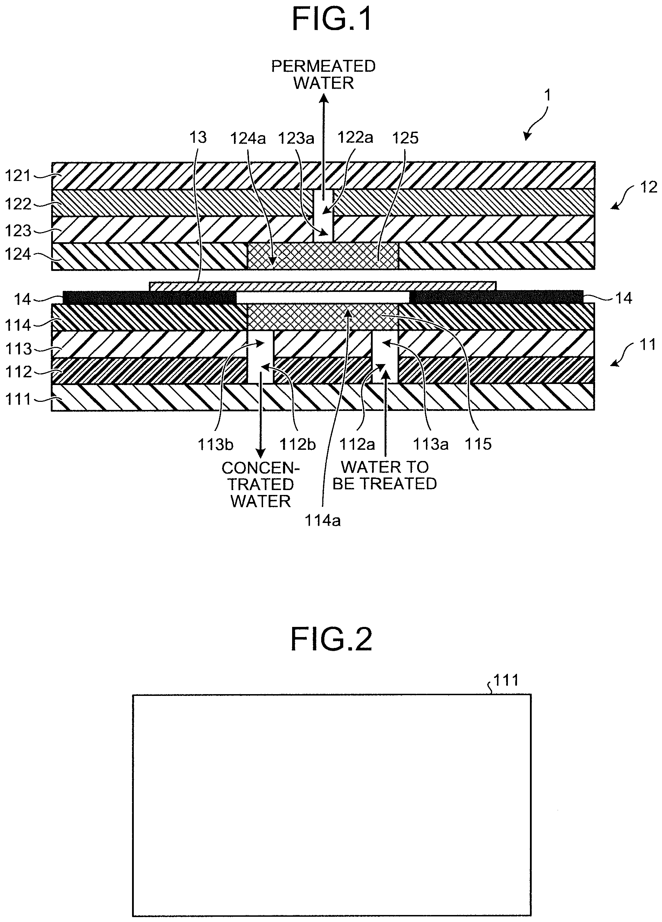

FIG. 1 is a schematic sectional view of a membrane separation apparatus according to an example serving to explain features of the present invention. As illustrated in FIG. 1, a membrane separation apparatus 1 according to this example includes: a lower support body 11, an upper support body 12, a separation membrane 13 provided between the lower support body 11 and the upper support body 12, and a sheet-like elastic member 14 that is arranged between the lower support body 11 and the separation membrane 13, and that seals between the separation membrane 13 and the lower support body 11 and between the upper support body 12 and the lower support body 11.

The lower support body 11 generally has a cuboidal shape formed of plural plate-like members layered over one another, and is formed of a resin material, stainless steel, and the like. The lower support body 11 includes: a lower support portion 111, a water-to-be-treated introduction portion 112 that is provided on this lower support portion 111, and that is provided with a water-to-be-treated introduction port 112a for water to be treated that is subjected to filtration treatment by the separation membrane 13, and a concentrated water discharge port 112b, through which concentrated water that has been concentrated by the separation membrane 13 is discharged, a lower flow channel portion 113 that is provided on this water-to-be-treated introduction portion 112, and that is provided with a water-to-be-treated flow channel 113a, through which the water to be treated is supplied toward the separation membrane 13, and a concentrated water flow channel 113b, through which filtered water that has been filtered by the separation membrane 13 is discharged, and a primary side flow channel portion 114 that is provided between this lower flow channel portion 113 and the separation membrane 13, and that is provided with a primary side flow channel 114a, through which the water to be treated is supplied to the separation membrane 13 and through which the concentrated water that has been concentrated by the separation membrane 13 is discharged. In a space surrounded by the separation membrane 13, the primary side flow channel portion 114, and the lower flow channel portion 113, a spacer 115 that maintains a flow channel for the water to be treated and the concentrated water in the space is arranged. Although an example, in which the lower support body 11 is generally cuboidal, is described in this example, the shape of the lower support body 11 may be modified, as appropriate.

In the membrane separation apparatus 1 according to this example, by the lower support body 11 being formed of plural members, such as, as described above, the lower support portion 111, the water-to-be-treated introduction portion 112, the lower flow channel portion 113, and the primary side flow channel portion 114, even if, for example, a problem, such as blockage of the concentrated water discharge port 112b of the water-to-be-treated introduction portion 112 due to generation of scale or the like in the concentrated water discharge port 112b, is caused, just by replacement of at least one of the water-to-be-treated introduction portion 112, the lower flow channel portion 113, and the like, where the problem is caused, the problem is able to be solved, and thus maintainability is improved. Further, even if there is a demand for modification in the configuration of the membrane separation apparatus 1 associated with water quality variation in the water to be treated, just by replacement of the necessary portion/portions of the lower support body 11, the demand is able to be dealt with.

FIG. 2 is a schematic plan view of the lower support portion 111 of the membrane separation apparatus 1 according to this example. As illustrated in FIG. 2, the lower support portion 111 is formed of a plate like member that is roughly rectangular in a planar view thereof. The lower support portion 111 supports the water-to-be-treated introduction portion 112 from a lower surface side of the membrane separation apparatus 1.

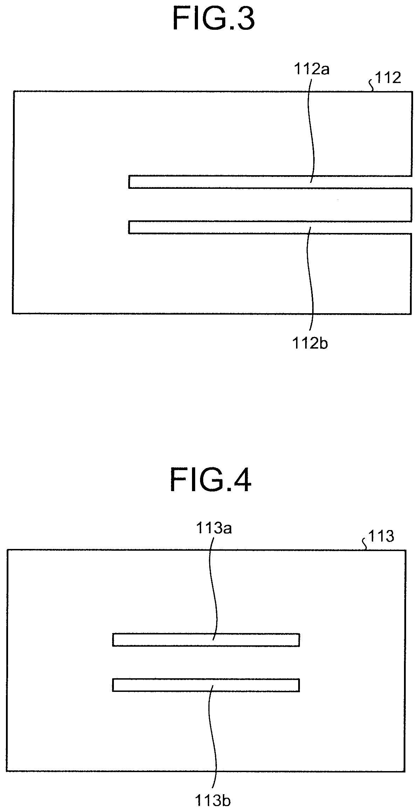

FIG. 3 is a schematic plan view of the water-to-be-treated introduction portion 112 of the membrane separation apparatus 1 according to this example. As illustrated in FIG. 3, the water-to-be-treated introduction portion 112 is formed of a plate like member that is roughly rectangular in a planar view thereof. The water-to-be-treated introduction port 112a and the concentrated water discharge port 112b of the water-to-be-treated introduction portion 112 are provided as substantially parallel notched portions extending from one end portion of the water-to-be-treated introduction portion 112 to a central portion thereof. By the provision of the water-to-be-treated introduction port 112a and the concentrated water discharge port 112b as described above, water to be treated introduced from the water-to-be-treated introduction port 112a at the one end portion of the water-to-be-treated introduction portion 112 is supplied toward the separation membrane 13, and concentrated water that has been concentrated by the separation membrane 13 is discharged from the one end portion side of the water-to-be-treated introduction portion 112 via the concentrated water discharge port 112b.

FIG. 4 is a schematic plan view of the lower flow channel portion 113 of the membrane separation apparatus 1 according to this example. As illustrated in FIG. 4, the lower flow channel portion 113 is formed of a plate like member that is roughly rectangular in a planar view thereof. The water-to-be-treated flow channel 113a and the concentrated water flow channel 113b of the lower flow channel portion 113 are provided as substantially parallel slit like openings at a central portion of the lower flow channel portion 113. Further, the water-to-be-treated flow channel 113a and the concentrated water flow channel 113b are provided to overlap the water-to-be-treated introduction port 112a and the concentrated water discharge port 112b of the water-to-be-treated introduction portion 112, when the water-to-be-treated introduction portion 112 and the lower flow channel portion 113 are layered over each other. By the provision of the water-to-be-treated flow channel 113a and the concentrated water flow channel 113b as described above, the water to be treated supplied from the water-to-be-treated introduction portion 112 is supplied toward the separation membrane 13 via the water-to-be-treated flow channel 113a, and the concentrated water that has been concentrated by the separation membrane 13 is supplied toward the concentrated water discharge port 112b of the water-to-be-treated introduction portion 112 via the concentrated water flow channel 113b.

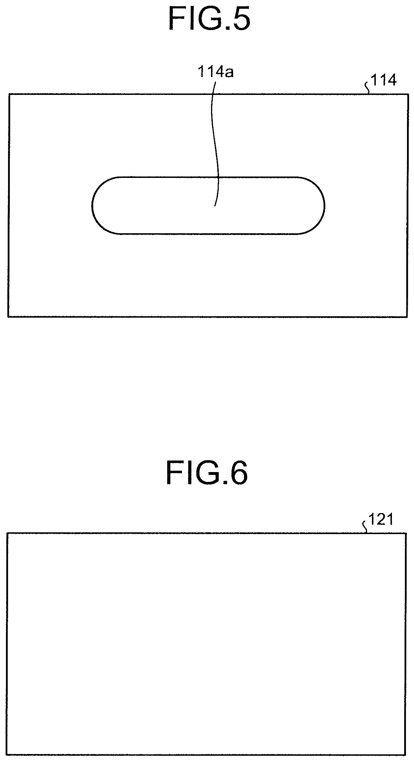

FIG. 5 is a schematic plan view of the primary side flow channel portion 114 of the membrane separation apparatus 1 according to this example. As illustrated in FIG. 5, the primary side flow channel portion 114 is formed of a plate like member that is roughly rectangular in a planar view thereof. The primary side flow channel 114a of the primary side flow channel portion 114 is provided as an opening that is roughly elliptical in a planar view thereof. Further, the primary side flow channel 114a is provided with an area smaller than that of the separation membrane 13 in a planar view thereof. Furthermore, the primary side flow channel 114a is provided to overlap the water-to-be-treated flow channel 113a and the concentrated water flow channel 113b of the lower flow channel portion 113 when the lower flow channel portion 113 and the primary side flow channel portion 114 are layered over each other. By the provision of the primary side flow channel 114a as described above, the water to be treated supplied from the lower flow channel portion 113 is supplied toward the separation membrane 13 via the primary side flow channel 114a, and the concentrated water that has been concentrated by the separation membrane 13 is supplied toward the lower flow channel portion 113 via the primary side flow channel 114a.

The upper support body 12 generally has a cuboidal shape formed of plural plate-like members layered over one another, and is formed of a resin material, stainless steel, and the like. The upper support body 12 includes: an upper support portion 121, a permeated water discharge portion 122 that is provided on (below in FIG. 1) this upper support portion 121, and that is provided with a permeated water discharge port 122a for permeated water that has been subjected to filtration treatment by the separation membrane 13, a permeated water flow channel portion 123 that is provided on (below in FIG. 1) this permeated water discharge portion 122, and that is provided with permeated water flow channels 123a, through which permeated water is guided toward the permeated water discharge port 122a of the permeated water discharge portion 122 from the separation membrane 13, and a secondary side flow channel portion 124 that is provided between this permeated water flow channel portion 123 and the separation membrane 13, and that is provided with a secondary side flow channel 124a, through which filtered water that has been filtered by the separation membrane 13 is discharged. In a space surrounded by the separation membrane 13, the permeated water flow channel portion 123, and the secondary side flow channel portion 124, a spacer 125 that maintains a flow channel for the permeated water in the space is arranged. By the upper support body 12 being formed of plural members, such as, as described above, the upper support portion 121, the permeated water discharge portion 122, the permeated water flow channel portion 123, and the secondary side flow channel portion 124, even if, for example, a problem, such as blockage of the permeated water flow channels 123a of the permeated water flow channel portion 123, is caused, just by replacement of only the permeated water discharge portion 122, the permeated water flow channel portion 123, and the like, where the problem is caused, the problem is able to be solved, and thus maintainability is improved. Further, even if there is a demand for modification in the configuration of the membrane separation apparatus 1 associated with water quality variation in the water to be treated, just by replacement of the necessary portion/portions of the upper support body 12, the demand is able to be dealt with.

FIG. 6 is a schematic plan view of the upper support portion 121 of the membrane separation apparatus 1 according to this example. As illustrated in FIG. 6, the upper support portion 121 is formed of a plate like member that is roughly rectangular in a planar view thereof. The upper support portion 121 supports the permeated water discharge portion 122 from an upper surface side of the membrane separation apparatus 1.

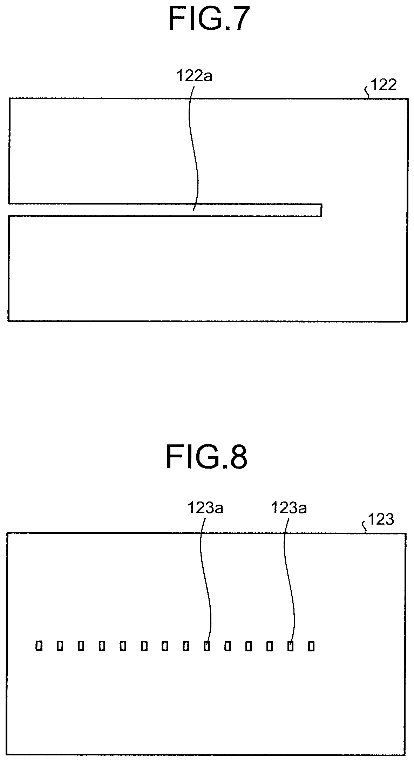

FIG. 7 is a schematic plan view of the permeated water discharge portion 122 of the membrane separation apparatus 1 according to this example. As illustrated in FIG. 7, the permeated water discharge portion 122 is formed of a plate like member that is roughly rectangular in a planar view thereof. The permeated water discharge port 122a of the permeated water discharge portion 122 is provided as a notched portion extending from the other end portion of the permeated water discharge portion 122 to a central portion thereof. By the provision of the permeated water discharge port 122a as described above, permeated water that has permeated the separation membrane 13 is discharged from the other end portion side of the permeated water discharge portion 122 via the permeated water discharge port 122a from the central portion of the permeated water discharge portion 122.

FIG. 8 is a schematic plan view of the permeated water flow channel portion 123 of the membrane separation apparatus 1 according to this example. As illustrated in FIG. 8, the permeated water flow channel portion 123 is formed of a plate like member that is roughly rectangular in a planar view thereof. The permeated water flow channel portion 123 has the plural permeated water flow channels 123a roughly collinearly provided therein, from the other end portion side of the permeated water flow channel portion 123 toward a central portion thereof, each of the permeated water flow channels 123a being roughly rectangular in a planar view thereof. Further, the plural permeated water flow channels 123a are provided to overlap the permeated water discharge port 122a of the permeated water discharge portion 122 in a planar view thereof. By the provision of the permeated water flow channels 123a as described above, the permeated water that has permeated the separation membrane 13 and has been supplied to the permeated water flow channel portion 123 via the secondary side flow channel 124a is supplied to the permeated water discharge port 122a of the permeated water discharge portion 122 via the permeated water flow channels 123a. Furthermore, by the division into and the provision of the plural permeated water flow channels 123a, the area of openings in the permeated water flow channel portion 123 by means of the permeated water flow channels 123a is able to be made small. Thereby, even if high pressure is exerted from the lower support body 11 when water to be treated is filtered, since the separation membrane 13 that is warped toward the upper support body 12 by the application of the pressure is supported by the non-opening portion of the permeated water flow channel portion 123, the membrane separation apparatus 1 is able to perform filtration treatment stably.

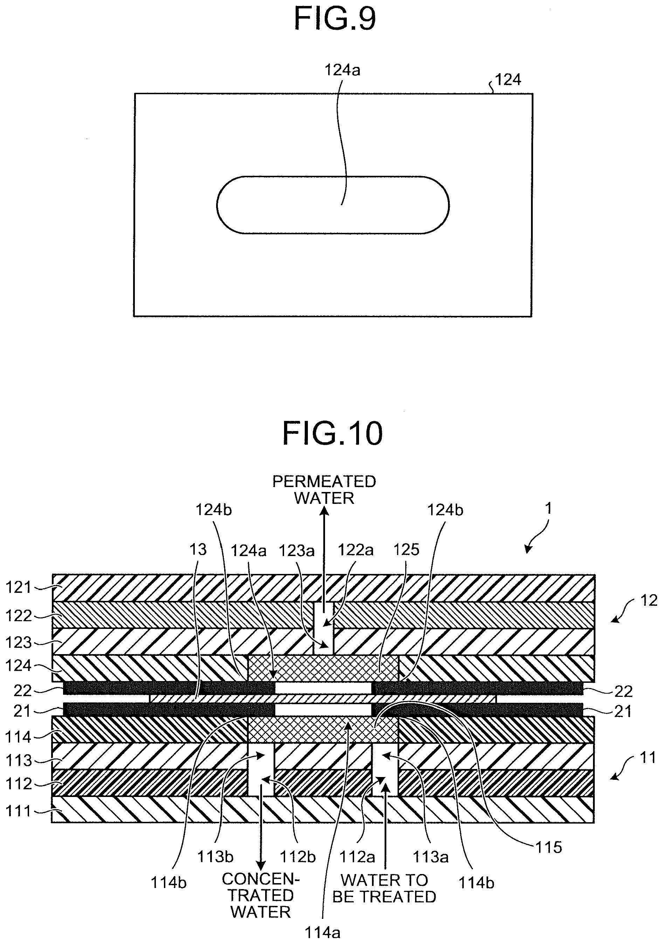

FIG. 9 is a schematic plan view of the secondary side flow channel portion 124 of the membrane separation apparatus 1 according to this example. The secondary side flow channel portion 124 is formed of a plate like member that is roughly rectangular in a planar view thereof. The secondary side flow channel 124a of the secondary side flow channel portion 124 is provided as an opening that is roughly elliptical in a planar view thereof. Further, the secondary side flow channel 124a is provided with an area smaller than that of the separation membrane 13 in a planar view thereof. Furthermore, the secondary side flow channel 124a is provided to overlap the permeated water flow channels 123a of the permeated water flow channel portion 123 when the permeated water flow channel portion 123 and the secondary side flow channel portion 124 are layered over each other. By the provision of the secondary side flow channel 124a as described above, permeated water permeating from the separation membrane 13 is supplied toward the permeated water flow channels 123a via the secondary side flow channel 124a.

As the separation membrane 13, for example, a reverse osmosis membrane (RO membrane), an ultrafiltration membrane (UF membrane), a microfiltration membrane (MF membrane), or the like is used. The separation membrane 13 is arranged so that both of end portions thereof are arranged to overlap, in a sectional view thereof, the non-opening portion of the primary side flow channel portion 114 and the non-opening portion of the secondary side flow channel portion 124 therebetween. Through the separation membrane 13: permeated water is obtained by water to be treated permeating the separation membrane 13 and suspended matter and salt in the water to be treated being removed, and concentrated water is obtained by the suspended matter, the salt, and the like in the water to be treated being concentrated. Thickness of the separation membrane 13 is, for example, equal to or larger than 0.05 mm and equal to or smaller than 2 mm.

The sheet-like elastic member 14 is arranged between the separation membrane 13 and the primary side flow channel portion 114. The sheet-like elastic member 14 is not particularly limited, as long as the sheet-like elastic member 14 is able to be used as a buffer between the separation membrane 13 and the primary side flow channel portion 114. For the sheet-like elastic member 14, for example, any of nitrile butyl rubber, fluororubber, hydrogenated nitrile rubber, and the like may be used. Of these, in terms of chemical resistance, as the sheet-like elastic member 14, fluororubber and hydrogenated nitrile rubber are preferable. The sheet-like elastic member 14 is arranged to cover both end portions of a lower surface side of the separation membrane 13 in a sectional view thereof. By the arrangement of the sheet-like elastic member 14 as described above, even if the sheet-like elastic member 14 is deteriorated, there is existence as a layer of an elastic member between the separation membrane 13 and the sheet-like elastic member 14, and surface contact between the separation membrane 13 and the lower support body 11 is able to be avoided, and thus the separation membrane 13 is able to be prevented from being damaged. Thickness of the sheet-like elastic member 14 is, for example, equal to or larger than 0.25 mm and equal to or smaller than 0.75 mm, but is not particularly limited.

As described above, since the sheet-like elastic member 14 seals between the separation membrane 13 and the lower support body 11 and between the lower support body 11 and the upper support body 12, without provision of a groove portion for accommodating a sealing member, the membrane separation apparatus 1 according to the above described example enables damage to the separation membrane 13 to be prevented even if the sheet-like elastic member 14 serving as the sealing member is deteriorated.

Further, in the membrane separation apparatus 1 according to the above described example, since the lower support body 11 is formed by the lower support portion 111, the water-to-be-treated introduction portion 112, the lower flow channel portion 113, and the primary side flow channel portion 114 being layered over one another, if a problem is caused in a part of the lower support body 11, just by replacement of the lower support portion 111, the water-to-be-treated introduction portion 112, the lower flow channel portion 113, and the primary side flow channel portion 114 that are being a cause of the problem, the problem in the lower support body 11 is able to be solved, and thus maintainability of the membrane separation apparatus 1 is improved. Further, even if there is a demand for modification in the configuration associated with water quality variation in the water to be treated, just by replacement of the necessary portion/portions, the configuration is able to be modified.

Further, in the membrane separation apparatus 1 according to the above described example, since the upper support body 12 is formed by the upper support portion 121, the permeated water discharge portion 122, the permeated water flow channel portion 123, and the secondary side flow channel portion 124 being layered over one another, if a problem is caused in a part of the upper support body 12, just by replacement of the upper support portion 121, the permeated water discharge portion 122, the permeated water flow channel portion 123, and the secondary side flow channel portion 124 being a cause of the problem, the problem in the upper support body 12 is able to be solved, and thus maintainability of the membrane separation apparatus 1 is improved. Further, even if there is a demand for modification in the configuration associated with water quality variation in the water to be treated, just by replacement of the necessary portion/portions, the configuration is able to be modified.

In the above described example, an example, in which the lower support body 11 has the lower support portion 111, the water-to-be-treated introduction portion 112, the lower flow channel portion 113, and the primary side flow channel portion 114 layered over one another, has been described, but the lower flow channel portion 113 is not necessarily provided therein.

### (Embodiment)

Next, an embodiment of the present invention will be described. Hereinafter, redundant description will be avoided by description with a focus on differences from the above described example. Further, description of any components in common with the above described example will be omitted.

FIG. 10 is a schematic sectional view of a membrane separation apparatus 1 according to an embodiment of the present invention. As illustrated in FIG. 10, the membrane separation apparatus 1 according to this embodiment includes, instead of the sheet-like elastic member 14 of the above described membrane separation apparatus 1, a first sheet-like elastic member 21 arranged between the separation membrane 13 and the lower support body 11, and a second sheet-like elastic member 22 arranged between the separation membrane 13 and the upper support body 12. Further, the spacer 115 is arranged in the opening of the primary side flow channel portion 114, and the spacer 125 is arranged in the opening of the secondary side flow channel portion 124. The remaining configuration is the same as that of the membrane separation apparatus 1 according to the above described example, and thus description thereof will be omitted.

As the first sheet-like elastic member 21, similarly to the sheet-like elastic member 14 according to the above described example, for example, any of nitrile butyl rubber, fluororubber, hydrogenated nitrile rubber, and the like may be used. The first sheet-like elastic member 21 is arranged to cover a part of the spacer 115 from both end portions of the lower support body 11. Further, the first sheet-like elastic member 21 has an area larger than that of an upper surface of the primary side flow channel portion 114 of the lower support body 11. The spacer 115 is for maintaining a flow channel for water to be treated and concentrated water, and is formed of a resin material, or the like. Furthermore, by the arrangement of the first sheet-like elastic member 21 as described above, contact between: the separation membrane 13, and the spacer 115 in the opening of the primary side flow channel portion 114, and a corner portion 114b of the primary side flow channel portion 114, is able to be prevented, and thus damage to the separation membrane 13 is able to be more efficiently prevented.

As the second sheet-like elastic member 22, similarly to the sheet-like elastic member 14 according to the above described example, for example, any of nitrile butyl rubber, fluororubber, hydrogenated nitrile rubber, and the like may be used. The second sheet-like elastic member 22 is arranged to cover a part of the spacer 125 from both end portions of the upper support body 12. Further, the second sheet-like elastic member 22 has an area larger than that of a lower surface of the secondary side flow channel portion 124 of the upper support body 12. The spacer 125 is for maintaining a flow channel for water to be treated and concentrated water, and is formed of a resin material, or the like. By the arrangement of the second sheet-like elastic member 22 as described above, contact between: the separation membrane 13, and the spacer 125 in the opening of the secondary side flow channel portion 124, and a corner portion 124b of the secondary side flow channel portion 124, is able to be prevented, and thus damage to the separation membrane 13 is able to be more efficiently prevented.

### Reference Signs List

- 1, 2: MEMBRANE SEPARATION APPARATUS
- 11: LOWER SUPPORT BODY
- 111: LOWER SUPPORT PORTION
- 112: WATER-TO-BE-TREATED INTRODUCTION PORTION
- 112a: WATER-TO-BE-TREATED INTRODUCTION PORT
- 112b: CONCENTRATED WATER DISCHARGE PORT
- 113: LOWER FLOW CHANNEL PORTION
- 113a: WATER-TO-BE-TREATED FLOW CHANNEL
- 114: PRIMARY SIDE FLOW CHANNEL PORTION
- 114a: PRIMARY SIDE FLOW CHANNEL
- 114b: CORNER PORTION
- 115: SPACER
- 12: UPPER SUPPORT BODY
- 121: UPPER SUPPORT PORTION
- 122: PERMEATED WATER DISCHARGE PORTION
- 122a: PERMEATED WATER DISCHARGE PORT
- 123: PERMEATED WATER FLOW CHANNEL PORTION
- 123a: PERMEATED WATER FLOW CHANNEL
- 124: SECONDARY SIDE FLOW CHANNEL PORTION
- 124a: SECONDARY SIDE FLOW CHANNEL
- 124b: CORNER PORTION
- 125: SPACER
- 13: SEPARATION MEMBRANE
- 14: SHEET-LIKE ELASTIC MEMBER
- 21: FIRST SHEET-LIKE ELASTIC MEMBER
- 22: SECOND SHEET-LIKE ELASTIC MEMBER

## Claims

1. A membrane separation apparatus (1), comprising:
a lower support body (11) having a water-to-be-treated introduction port (112a) and a concentrated water discharge port (112b) provided therein;
an upper support body (12) having a permeated water discharge port (122a) provided therein;
a separation membrane (13) that is provided between the lower support body (11) and the upper support body (12), and that is arranged to separate water to be treated into permeated water and concentrated water;
a first sheet-like elastic member (21) that is provided between the separation membrane (13) and the lower support body (11), and that seals between the separation membrane (13) and the lower support body (11) and between the lower support body (11) and the upper support body (12); and
a second sheet-like elastic member (22) that is provided between the upper support body (12) and the separation membrane (13), and that seals between the upper support body (12) and the lower support body (11),
wherein the lower support body (11) includes:
a lower support portion (111);
a water-to-be-treated introduction portion (112) that is provided on the lower support portion (111) and that is provided with the water-to-be-treated introduction port (112a) for water to be treated that is subjected to filtration treatment by the separation membrane (13), and the concentrated water discharge port (112b) through which concentrated water that has been concentrated by the separation membrane (13) is discharged;
a lower flow channel portion (113) that is provided on the water-to-be-treated introduction portion (112), and that is provided with a water-to-be-treated flow channel (113a) through which the water to be treated is supplied from the water-to-be-treated introduction port (112a) toward the separation membrane (13), and a concentrated water flow channel (113b) through which filtered water that has been filtered by the separation membrane (13) is discharged to the concentrated water discharge port (112b);
a primary side flow channel portion (114) that is provided between the lower flow channel portion (113) and the separation membrane (13) and that is provided with a primary side flow channel (114a) through which the water to be treated is supplied from water-to-be-treated flow channel (113a) to the separation membrane (13) and through which the concentrated water that has been concentrated by the separation membrane (13) is discharged to the concentrated water flow channel (113b); and
a first spacer (115) for maintaining a flow channel for the water to be treated and the concentrated water that is arranged in a space surrounded by the separation membrane (13), the primary side flow channel portion (114), and the lower flow channel portion (113),
wherein the lower support portion (111), the water-to-be-treated introduction portion (112), the lower flow channel portion (113), and the primary side flow channel portion (114) are respectively formed as plate-like members layered over one another, and
wherein the upper support body (12) includes:
an upper support portion (121);
a permeated water discharge portion (122) that is provided on the upper support portion (121) and that is provided with the permeated water discharge port (122a) for permeated water that has been subjected to filtration treatment by the separation membrane (13);
a permeated water flow channel portion (123) that is provided on the permeated water discharge portion (122) and that is provided with permeated water flow channels (123a) through which permeated water is guided toward the permeated water discharge port (122a) of the permeated water discharge portion (122) from the separation membrane (13);
a secondary side flow channel portion (124) that is provided between the permeated water flow channel portion (123) and the separation membrane (13) and that is provided with a secondary side flow channel (124a) through which filtered water that has been filtered by the separation membrane (13) is discharged; and
a second spacer (125) for maintaining a flow channel for the permeated water that is arranged in a space surrounded by the separation membrane (13), the permeated water flow channel portion (123), and the secondary side flow channel portion (124),
wherein the upper support portion (121), the permeated water discharge portion (122), the permeated water flow channel portion (123), and the secondary side flow channel portion (124) are respectively formed as plate-like members layered over one another.

2. The membrane separation apparatus (1) according to claim 1, wherein the first sheet-like elastic member (21) and the second sheet-like elastic member (22) are arranged to cover a corner portion (114b,124b) of an opening of the lower support body (11).

3. The membrane separation apparatus (1) according to claim 1 or 2, wherein the first sheet-like elastic member (21) and the second sheet-like elastic member (22) contains at least one type of rubber selected from the group consisting of fluororubber, nitrile butyl rubber, and hydrogenated nitrile rubber.

## Patentansprüche

1. Eine Membranabscheidungsvorrichtung (1) mit:
einem unteren Tragkörper (11) mit einem Einführport für zu behandelndes Wasser (112a) und einem Austragport für konzentriertes Wasser(112b), die darin vorgesehen sind,
einem oberen Tragkörper (12) mit einem Austragsport für durchgelassenes Wasser (122a), der darin vorgesehen ist,
einer Trennmembran (13), die zwischen dem unteren Tragkörper (11) und dem oberen Tragkörper (12) vorgesehen ist, und die angeordnet ist, um zu behandelndes Wasser in durchgelassenes Wasser und konzentriertes Wasser zu trennen,
einem ersten lagenartigen elastischen Element (21), das zwischen der Trennmembran (13) und dem unteren Tragkörper (11) vorgesehen ist und das eine Abdichtung zwischen der Trennmembran (13) und dem unteren Tragkörper (11) und zwischen dem unteren Tragkörper (11) und dem oberen Tragkörper (12) herstellt, und
einem zweiten lagenartigen elastischen Element (22), das zwischen dem oberen Tragkörper (12) und der Trennmembran (13) vorgesehen ist und das eine Abdichtung zwischen dem oberen Tragkörper (12) und dem unteren Tragkörper (11) herstellt,
wobei der untere Tragkörper (11) aufweist:
einen unteren Tragabschnitt (111),
einen Einführabschnitt für zu behandelndes Wasser (112), der in dem unteren Tragabschnitt (111) vorgesehen ist und der mit dem Einführport für zu behandelndes Wasser (112a) für zu behandelndes Wasser, das einer Filtrationsbehandlung durch die Trennmembran (13) unterzogen wird, und mit dem Austragport für konzentriertes Wasser (112b), durch den konzentriertes Wasser, das durch die Trennmembran (13) konzentriert wurde, ausgetragen wird,
einen unteren Strömungskanalabschnitt (113), der an dem Einbringabschnitt für zu behandelndes Wasser (112) vorgesehen ist und der mit einem Strömungskanal für zu behandelndes Wasser (113a) versehen ist, durch den das zu behandelnde Wasser von dem Einbringport für zu behandelndes Wasser (112a) zu der Trennmembran (13) zugeführt wird, und einen Strömungskanal für konzentriertes Wasser (113b), durch den gefiltertes Wasser, das durch die Trennmembran (13) gefiltert wurde, zu dem Austragsport für konzentriertes Wasser (112b) ausgetragen wird,
einen primärseitigen Strömungskanalabschnitt (114), der zwischen dem unteren Strömungskanalabschnitt (113) und der Trennmembran (13) vorgesehen ist, und der mit einem primärseitigen Strömungskanal (114a) versehen ist, durch den das zu behandelnde Wasser von dem Strömungskanal für zu behandelndes Wasser (113a) der Trennmembran (13) zugeführt wird und durch den das konzentrierte Wasser, das durch die Trennmembran (13) konzentriert wurde, zu dem Strömungskanal für konzentriertes Wasser (113b) ausgetragen wird, und
einen ersten Abstandhalter (115) zum Einhalten eines Strömungskanals für das zu behandelnde Wasser und das konzentrierte Wasser, der in einem Zwischenraum angeordnet ist, der von der Trennmembran (13), dem primärseitigen Strömungskanalabschnitt (114) und dem unteren Strömungskanalabschnitt (113) umgeben ist,
wobei der untere Tragabschnitt (111), der Einbringabschnitt für zu behandelndes Wasser (112), der untere Strömungskanalabschnitt (113) und der primärseitige Strömungskanalabschnitt (114) jeweils als plattenartige Elemente ausgebildet sind, die übereinander gelagert sind, und wobei der obere Tragkörper (12) aufweist:
einen oberen Tragabschnitt (121),
einen Austragabschnitt für durchgelassenes Wasser (122), der an den oberen Tragabschnitt (121) vorgesehen ist und der mit dem Austragsport für durchgelassenes Wasser (122a) für durchgelassenes Wasser, das der Filtrationsbehandlung durch die Trennmembran (13) unterzogen wurde, versehen ist,
einen Strömungskanalabschnitt für durchgelassenes Wasser (123), der an dem Austragsabschnitt für durchgelassenes Wasser (122) vorgesehen ist und der mit Strömungskanälen für durchgelassenes Wasser (123a) versehen ist, durch die durchgelassenes Wasser zu dem Austragport für durchgelassenes Wasser (122a) des Austragabschnitts für durchgelassenes Wasser (122) von der Trennmembran (13) geleitet wird,
einen sekundärseitigen Strömungskanalabschnitt (124), der zwischen den Strömungskanalabschnitt für durchgelassenes Wasser (123) und der Trennmembran (13) vorgesehen ist und der mit einem sekundärseitigen Strömungskanal (124a) versehen ist, durch den gefiltertes Wasser, das durch die Trennmembran (13) gefiltert wurde, ausgetragen wird, und
einen zweiten Abstandhalter (125) zum Einhalten eines Strömungskanals für das durchgelassene Wasser, der in einem Zwischenraum angeordnet ist, der von der Trennmembran (13), dem Strömungskanalabschnitt für durchgelassenes Wasser (123) und dem sekundärseitigen Strömungskanalabschnitt (124) umgeben ist,
wobei der obere Tragabschnitt (121), der Austragabschnitt für durchgelassenes Wasser (122), der Strömungskanalabschnitt für durchgelassenes Wasser (123) und der sekundärseitige Strömungskanal (124) jeweils als plattenartige Elemente ausgebildet sind, die einander überlagert sind.

2. Die Membranabscheidungsvorrichtung (1) gemäß Anspruch 1, wobei das erste lagenartige elastische Element (21) und das zweite lagenartige elastische Element (22) angeordnet sind, um einen Eckabschnitt (114b,124b) einer Öffnung des unteren Tragkörpers (11) abzudecken.

3. Die Membranabscheidungsvorrichtung (1) gemäß Anspruch 1 oder 2, wobei das erste lagenartige elastische Element (21) und das zweite lagenartige elastische Element (22) zumindest eine Art von Gummi enthält, der aus der Gruppe ausgewählt ist, die aus Fluorgummi, Nitrilbutylgummi und hydrogeniertem Nitrilgummi besteht.

## Revendications

1. Installation (1) de séparation par membrane, comprenant :
un corps (11) inférieur formant support, ayant un orifice (112a) d'introduction d'eau à traiter et un orifice (112b) d'évacuation d'eau concentrée, qui y sont prévus ;
un corps (12) supérieur formant support, ayant un orifice (122a) d'évacuation d'eau ayant perméé, qui y est prévu ;
une membrane (13) de séparation qui est prévue entre le corps (11) inférieur formant support et le corps (12) supérieur formant support et qui est agencée pour séparer de l'eau à traiter en de l'eau ayant perméé et en de l'eau concentrée ;
un premier élément (21) élastique analogue à une feuille, qui est prévu entre la membrane (13) de séparation et le corps (11) inférieur formant support et qui assure l'étanchéité entre la membrane (13) de séparation et le corps (11) inférieur formant support et entre le corps (11) inférieur formant support et le corps (12) supérieur formant support et
un deuxième élément (22) élastique analogue à une feuille, qui est prévu entre le corps (12) supérieur formant support et la membrane (13) de séparation et qui assure l'étanchéité entre le corps (12) supérieur formant support et le corps (11) inférieur formant support,
dans laquelle le corps (11) inférieur formant support comprend :
une partie (111) inférieure de support ;
une partie (112) d'introduction d'eau à traiter, qui est prévue sur la partie (111) inférieure de support et qui est pourvue de l'orifice (112a) d'introduction d'eau à traiter pour de l'eau à traiter, qui est soumise à un traitement de filtration par la membrane (13) de séparation, et de l'orifice (112b) d'évacuation d'eau concentrée, par lequel de l'eau concentrée, qui a été concentrée par la membrane (13) de séparation, est évacuée ;
une partie (113) inférieure de canal d'écoulement, qui est prévue sur la partie (112) d'introduction d'eau à traiter et qui est pourvue d'un canal (113a) d'écoulement d'eau à traiter, par lequel l'eau à traiter est envoyée de l'orifice (112a) d'introduction d'eau à traiter à la membrane (13) de séparation, et d'un canal (113b) d'écoulement d'eau concentrée, par lequel de l'eau filtrée, qui a été filtrée par la membrane (13) de séparation, est évacuée vers l'orifice (112b) d'évacuation d'eau concentrée ;
une partie (114) de canal d'écoulement du côté primaire, qui est prévue entre la partie (113) inférieure de canal d'écoulement et la membrane (13) de séparation et qui est pourvue d'un canal (114a) d'écoulement du côté primaire, par lequel l'eau à traiter est envoyée du canal (113a) d'écoulement d'eau à traiter à la membrane (13) de séparation et par lequel l'eau concentrée, qui a été concentrée par la membrane (13) de séparation est évacuée vers le canal (113b) d'écoulement d'eau concentrée et
un premier intercalaire (115) pour maintenir un canal d'écoulement pour l'eau à traiter et l'eau concentrée, qui est disposé dans un espace entouré de la membrane (13) de séparation, de la partie (114) de canal d'écoulement du côté primaire et de la partie (113) inférieure de canal d'écoulement,
dans laquelle la partie (111) inférieure formant support, la partie (112) d'introduction d'eau à traiter, la partie (113) inférieure de canal d'écoulement et la partie (114 de canal d'écoulement du côté primaire sont sous la forme, respectivement, d'éléments en forme de plaque mis les uns sur les autres et
dans laquelle le corps (12) supérieur formant support comprend :
une partie (121) supérieure de support ;
une partie (122) d'évacuation d'eau ayant perméé, qui est prévue sur la partie (121) supérieure de support et qui est pourvue de l'orifice (122a) d'évacuation d'eau ayant perméé pour de l'eau ayant perméé, qui a été soumise à un traitement de filtration par la membrane (13) de séparation ;
une partie (123) de canal d'écoulement d'eau ayant perméé, qui est prévue sur la partie (122) d'évacuation d'eau ayant perméé et qui est pourvue de canaux (123a) d'écoulement d'eau ayant perméé, par lesquels de l'eau perméé est conduite vers l'orifice (122a) d'évacuation d'eau ayant perméé de la partie (122) d'évacuation d'eau ayant perméé à partir de la membrane (13) de séparation ;
une partie (124) de canal d'écoulement du côté secondaire, qui est prévue entre la partie (123) de canal d'écoulement d'eau ayant perméé et la membrane (13) de séparation et qui est pourvue d'un canal (124a) d'écoulement du côté secondaire, par lequel de l'eau filtrée, qui a été filtrée par la membrane (13) de séparation, est évacuée et
un deuxième intercalaire (125) pour maintenir un canal d'écoulement pour l'eau ayant perméé, qui est disposé dans un espace entouré de la membrane (13) de séparation, de la partie (123) de canal d'écoulement d'eau ayant perméé et de la partie (124) de canal d'écoulement du côté secondaire,
dans laquelle la partie (121) supérieure formant support, la partie (122) d'évacuation d'eau ayant perméé, la partie (123) de canal d'écoulement d'eau ayant perméé et la partie (124) de canal d'écoulement du côté secondaire sont formées, respectivement, sous la forme d'éléments analogues à une plaque mis les uns sur les autres.

2. Installation (1) de séparation par membrane suivant la revendication 1, dans laquelle le premier élément (21) élastique analogue à une feuille et le deuxième élément (22) élastique analogue à une feuille sont disposés pour couvrir une partie (114b, 124b) de coin d'une ouverture du corps (11) inférieur formant support.

3. Installation (1) de séparation par membrane suivant la revendication 1 ou 2, dans laquelle le premier élément (21) élastique analogue à une feuille et le deuxième élément (22) élastique analogue à une feuille contiennent au moins un type de caoutchouc choisi dans le groupe consistant en du caoutchouc fluoré, du caoutchouc nitrile butyle et du caoutchouc nitrile hydrogéné.
